# FASCICULE DE BREVET EUROPEEN

(11) **EP 1 610 922 B1**
(45) Date de publication et mention de la délivrance du brevet: **04.10.2006**
(21) Numéro de dépôt: 04718654.9
(22) Date de dépôt: 09.03.2004
(51) Int. Cl.: B23K 26/06, B23K 26/38, F02M 61/16

(54) **DISPOSITIF LASER POUR PERCER DES TROUS DANS DES COMPOSANTS D'UN DISPOSITIF D INJECTION D UN FLUIDE**
LASERVORRICHTUNG, DIE ZUR HERSTELLUNG VON LÖCHERN IN BAUTEILEN EINER FLUIDEINSPRITZVORRICHTUNG VERWENDET WIRD
LASER DEVICE WHICH IS USED TO PIERCE HOLES IN COMPONENTS OF A FLUID-INJECTION DEVICE

(30) Priorité: 26.03.2003 EP 03006697
(43) Date de publication de la demande: 04.01.2006
(73) Titulaire: LASAG AG, 3602 Thun (CH)
(72) Inventeur: DÜRR, Ulrich, CH-3608 Allmendingen (CH); FREI, Bruno, CH-3634 Thierachern (CH)
(74) Mandataire: Surmely, Gérard
(86) Numéro de dépôt international: PCT/EP2004/002408
(87) Numéro de publication internationale: WO 2004/085109

(56) Documents cités:
- US-A1- 2002 000 426

## Description

La présente invention concerne un dispositif d'usinage laser pour percer des trous dans des composants d'un dispositif d'injection d'un fluide, comme dans le préambule de la revendication 1, en particulier d'un carburant dans un moteur à combustion. Par moteur à combustion, on comprend tout type de moteur ou de réacteur dans lequel un carburant est fourni directement ou indirectement à au moins une chambre de combustion par l'intermédiaire d'un dispositif d'injection. Par composant d'un dispositif d'injection, on comprend notamment des buses d'injection, des régulateurs de débit ou encore des filtres.

Actuellement, on connaît diverses méthodes pour percer des trous dans les composants susmentionnés, notamment l'utilisation de certains dispositifs laser. Le document US 2002/0000426 A décrit un tel dispositif. Par exemple, on a déjà proposé l'utilisation de lasers à milieu actif solide pompés par diode laser (DPSSL) et agencés avec des moyens de variation du facteur de qualité Q du résonateur (Q-switch). De tels lasers engendrent une pluralité d'impulsions dont la très courte période est généralement bien inférieure à 1µs, par exemple 15 nanosecondes.

Un dispositif laser du type mentionné ci-dessus a été déjà réalisé par diverses sociétés. L'utilisation d'un tel laser à cristal pompé par des diodes laser présente de nombreux avantages relativement à un laser à cristal, par exemple Nd : YAG, pompé par une lampe flash. En effet, l'utilisation d'une telle lampe flash engendre des variations d'une impulsion à l'autre, notamment une fluctuation d'intensité des impulsions fournies, une variation dans la durée du flan montant de celles-ci. De plus, la stabilité du résonateur n'est pas très bonne, en particulier à cause de l'échauffement du milieu actif par la lampe flash qui présente un spectre d'émission relativement large. Le laser présente ainsi un rendement non optimal car une partie de l'énergie n'est pas utilisée pour la génération du faisceau laser. Ceci a également pour conséquence que le milieu actif est soumis à des contraintes thermiques qui diminuent la stabilité et la qualité d'émission des impulsions. Ceci a pour inconvénients majeurs de limiter la précision des trous à usiner et d'empêcher une bonne reproductibilité d'un trou à l'autre. Ainsi, la géométrie des trous effectués par des lasers pompés à l'aide d'une lampe flash présente de mauvaises tolérances d'usinage et ne permet pas de déterminer précisément le débit d'un fluide au travers de ces trous.

Toutefois, l'usinage de trous à l'aide d'un dispositif laser équipé d'un Q-switch fournissant des trains d'impulsions de très courte durée, dans le domaine des nanosecondes, pose un problème d'efficacité pour l'usinage des trous. En effet, l'usinage de trous, en particulier d'une certaine profondeur, nécessite un grand nombre de telles impulsions successives, ce qui limite la vitesse d'usinage de tels trous et donc le rendement industriel d'un tel usinage. De plus, un tel dispositif laser est relativement peu flexible car il ne permet guère de varier précisément le profil des impulsions engendrées par le résonateur de manière à obtenir des impulsions avec un profil d'intensité adapté à l'usinage de chaque type de trous différents. La géométrie des trous usinés est donc difficilement variable dû au manque de souplesse dans le réglage des paramètres définissant les très courtes impulsions engendrées par le résonateur. Ensuite, des impulsions dans le domaine des nanosecondes ne permettent pas d'usiner des trous d'un diamètre relativement grand sans avoir recours à un procédé d'usinage nécessitant plusieurs perçages le long d'un tracé circulaire. Finalement, la fréquence du Q-Switch est limitée à cause de la formation d'un plasma durant une courte période, ce plasma absorbant l'énergie lumineuse d'une impulsion suivante s'il est encore présent au-dessus de la région d'usinage d'un trou.

Le but de la présente invention est de fournir un dispositif laser pour percer des trous dans des composants de dispositifs d'injection de fluides, notamment de carburant qui présente une bonne stabilité de fonctionnement, une grande précision d'usinage de trous et qui permet d'usiner ces trous à relativement haute vitesse pour obtenir un haut rendement industriel.

Un autre but de l'invention est de fournir un tel dispositif qui limite les coûts d'investissement nécessaire tout en conservant son efficacité. A cet effet, l'invention concerne un dispositif d'usinage laser conformément à la revendication 1.

Grâce aux caractéristiques du dispositif d'usinage laser selon l'invention, il est possible de percer des trous de manière efficace avec une grande précision, c'est-à-dire avec des tolérances d'usinage faibles, dans des composants d'un dispositif d'injection de carburant, par exemple dans une buse d'injection ou dans un orifice d'étranglement servant à déterminer le débit d'un fluide. Ce dispositif permet d'engendrer des impulsions primaires de durée relativement longues, en particulier supérieur à 50µs. On a observé qu'un train d'impulsions présentant chacune une relativement courte durée, par exemple entre 1 et 20µs, augmente le rendement et la précision du perçage au moyen d'un dispositif laser. Toutefois, cette efficacité diminue avec des impulsions périodiques dans le domaine des nanosecondes engendrées par un résonateur avec un Q-Switch. En effet, on a observé dans le cadre de la présente invention que le rendement d'usinage de matériaux durs est plus faible dans le domaine des nanosecondes que dans le domaine des microsecondes. Cependant, la précision d'usinage requière de ne pas trop augmenter l'énergie par impulsion. Le dispositif selon l'invention permet d'engendrer un tel train d'impulsions secondaires avec un profil d'intensité optimal grâce aux moyens de modulation prévus en aval d'un résonateur laser sans Q-Switch fournissant des impulsions primaires dont l'énergie est supérieure à celle d'une impulsion secondaire. Le dispositif laser est donc agencé pour fournir dans des périodes relativement courtes une assez grande quantité d'énergie permettant un usinage rapide de trous tout en modulant l'intensité lumineuse pour obtenir un perçage précis et propre. Un autre avantage des impulsions modulées est l'optimisation du procédé de perçage relativement à la dynamique du plasma engendré par les impulsions laser. Les impulsions primaires peuvent être fournie périodiquement pour l'usinage d'une pluralité de trous avec un rendement industriel élevé.

Les moyens de modulation sont par exemple formés par une cellule de Pockels. De telles cellules peuvent être commandées de manière précise et permettent également de faire varier le profil d'intensité du train d'impulsions secondaires fournis en sortie de la cellule pour optimiser l'efficacité du perçage des trous en fonction du matériau dans lequel ces trous sont effectués et également en fonction des paramètres géométriques définis pour ces trous.

On notera que la combinaison d'un résonateur pompé par diodes lasers et fournissant des impulsions primaires dans le domaine des microsecondes, en particulier de l'ordre des dizaines ou centaines de microsecondes, avec des moyens de modulation de ces impulsions primaires permettant de varier la distribution temporelle de l'énergie en formant une pluralité d'impulsions de périodes plus courtes constitue une solution particulièrement efficace, car elle cumule les avantages de rendement et de stabilité pour le résonateur avec la flexibilité dans la génération de la distribution d'énergie arrivant sur le matériau usiné et ainsi la précision du perçage effectué. Il résulte donc des caractéristiques de l'invention que le dispositif d'usinage laser permet d'usiner des trous de manière reproductible avec de faibles tolérances. Le dispositif selon l'invention est ainsi particulièrement bien adapté au perçage de trous ou orifices d'étranglement dans les composants d'un dispositif ou système d'injection d'un fluide, en particulier d'un carburant.

Le dispositif d'usinage laser selon l'invention sera décrit ci-après plus en détail à l'aide du dessin annexé, donné à titre d'exemple non limitatif, dans lequel :
- la figure 1 représente de manière schématique les éléments principaux d'un mode de réalisation préféré de l'invention;
- la figure 2 montre les divers éléments d'un premier mode de réalisation du résonateur du dispositif de la figure 1;
- la figure 3 montre la transformation du faisceau laser par les moyens de modulation du dispositif de la figure 1;
- la figure 4 montre un deuxième mode de réalisation du résonateur du dispositif de la figure 1, et
- la figure 5 représente schématiquement un mode particulier d'agencement des moyens d'amplification du dispositif de la figure 1.

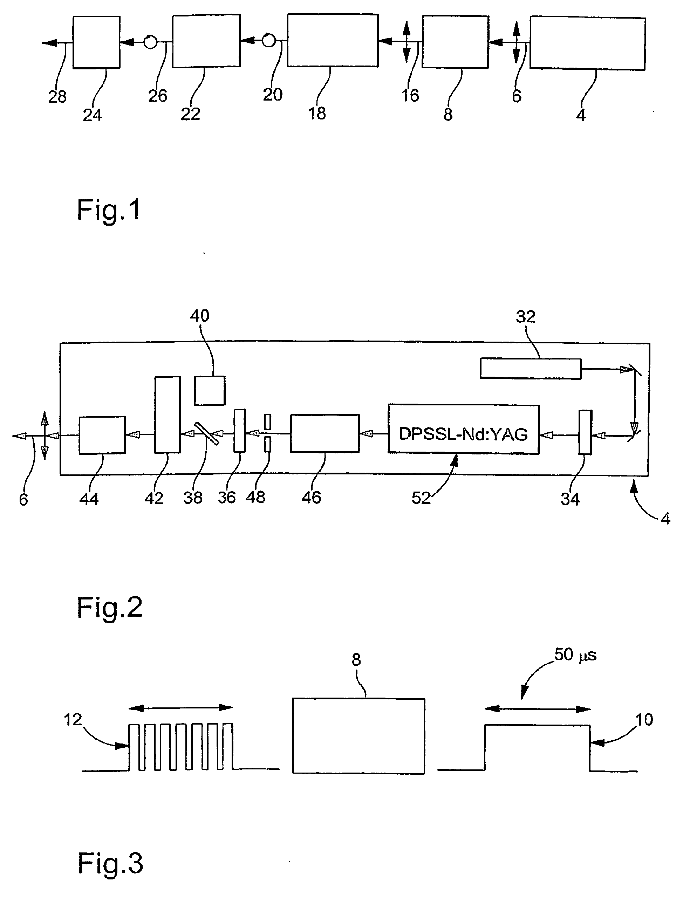

A l'aide des figures 1 à 3, on décrira ci-après un premier mode de réalisation de l'invention. Ce dispositif comprend un résonateur 4 fournissant un faisceau laser 6 présentant une polarisation linéaire. Ce faisceau 6 est formé d'une succession d'impulsions primaires dans le domaine des microsecondes. II est fourni à des moyens de modulation 8 agencés pour moduler le faisceau laser entrant de manière à varier la distribution d'intensité de ce faisceau, c'est-à-dire de varier le profil de puissance de ce dernier de manière à former des trains d'impulsions secondaires de durée inférieure aux impulsions primaires fournies par le résonateur 4. Par impulsions dans le domaine des microsecondes, on comprend des impulsions dont la durée est supérieure à 1 µs, en particulier entre 50µs et 1 milliseconde.

Dans une variante préférée de l'invention, le dispositif d'usinage laser est agencé de manière à ce que les impulsions primaires engendrées par le résonateur 4 permettent chacune d'effectuer un trou dans le composant usiné. Ceci permet d'obtenir un haut rendement industriel dans la fabrication des composants d'un dispositif d'injection, sans nuire à la précision d'usinage et à la qualité des trous effectués grâce aux moyens de modulation 8, en particulier formés d'une cellule de Pockels. De plus cette solution permet d'obtenir un très bon rendement énergétique pour un milieu actif formé d'un cristal du type Nd : YAG pompé optiquement par des diodes laser (DPSSL). La combinaison d'un tel résonateur avec les moyens de modulation agencés en aval permet toutefois d'obtenir des trains d'impulsions secondaires de durée inférieure, en particulier entre 1 et 20µs comme cela est représenté à la figure 3. A titre d'exemple, les impulsions primaires 10 fournies par le résonateur ont une durée entre 50µs et 1 ms. La cellule de Pockels 8 module l'impulsion primaire 10 et fournit en sortie un train d'impulsions secondaires 12 ayant chacune une durée comprise entre 1 et 20µs. On notera que la cellule de Pockels peut être commandée de manière à définir précisément un profil de puissance optimal pour l'application sélectionnée. Ainsi, la modulation en puissance n'est pas nécessairement binaire, mais peut varier entre un minimum non nul et un maximum donné.

Le faisceau laser 16 sortant du modulateur 8 reste polarisée linéairement. Ce faisceau 16 entre ensuite dans une diode optique 18 formée par exemple par un polariseur linéaire et par une lame quart-d'ondes agencée à la suite de ce polariseur. Le faisceau laser 20 sortant de cette diode optique présente une polarisation circulaire. Le faisceau 20 entre ensuite dans un amplificateur 22 agencé pour amplifier les trains d'impulsions secondaires 12. Généralement, cet amplificateur est formé par un milieu actif solide pompé optiquement.

Avantageusement il est possible de commander les moyens d'amplification de manière à varier l'amplitude des impulsions secondaires, au sein d'un même train d'impulsions secondaires, par décalage temporel de l'impulsion engendrée dans ces moyens d'amplification relativement à l'enveloppe de l'impulsion primaire arrivant dans ces moyens d'amplification. On utilise ainsi le flanc montant ou le flanc descendant de l'impulsion d'amplification pour moduler en amplitude les impulsions secondaires.

La diode optique 18 sert principalement à protéger le résonateur 4 contre des réflexions au niveau de l'amplificateur 22 et également de la tête d'usinage 24 suivant cet amplificateur. Le faisceau laser 26 sortant de l'amplificateur 22 est toujours polarisé circulairement, tout comme le faisceau 28 sortant de la tête d'usinage 24.

La tête d'usinage comprend des moyens de focalisation et peut également comprendre un expanseur de faisceaux précédant les moyens de focalisation.

On remarquera que l'agencement d'une diode optique dans le dispositif de la figure 1 permet d'augmenter l'efficacité de ce dispositif et en particulier d'augmenter la qualité du faisceau laser fourni. De plus, cette diode optique permet d'assurer la stabilité du résonateur en évitant des perturbations et/ou interférences dans la cavité résonante. Ceci permet donc d'assurer une bonne reproductibilité d'une impulsion primaire à l'autre et donc d'une bonne reproductibilité des trains d'impulsions fournis par le dispositif en sortie de la tête d'usinage 24.

Le résonateur 4 est montré plus en détail à la figure 2. Il comprend de manière classique un laser de positionnement 32 permettant d'ajuster la position des éléments de la cavité résonante et également d'orienter correctement la pièce à usiner relativement au faisceau laser. Ensuite, il comprend de manière classique un miroir 34 et un miroir partiellement réfléchissant 36. Il comprend aussi un séparateur de faisceaux 38 permettant de mesurer l'énergie du faisceau à l'aide des moyens de mesure 40. Il comprend également un obturateur de sécurité 42 et finalement un expanseur 44 permettant d'augmenter le diamètre du faisceau laser engendré. Dans le mode de réalisation de la figure 2, le résonateur 4 comprend en outre un polariseur linéaire 46 et un diaphragme 48. Ce résonateur comprend une cavité 52 formé d'un milieu actif solide en cristal Nd : YAG. Dans le cas de la présente invention, ce milieu actif est pompé optiquement par des diodes laser agencées de manière connues de l'homme du métier, notamment sous forme de barre ou de matrice de diodes.

Comme mentionné précédemment, le dispositif d'usinage laser selon l'invention permet d'obtenir un faisceau de bonne qualité, propre à un usinage précis de trous dans divers composants, en particulier des composants d'un dispositif d'injection de fluide. Par ceci, on comprend notamment un faisceau qui soit bien circulaire, qui présente une distribution d'intensité sensiblement constante et qui puisse être focalisé précisément avec un diamètre au point focal relativement petit. Ce dispositif a également une très bonne stabilité. Cette stabilité se caractérise notamment par une faible fluctuation de la puissance moyenne fournie, par une faible variation de la puissance des impulsions primaires engendrées par le résonateur et finalement par une faible variation de la puissance du train d'impulsions secondaires fournies par le dispositif laser, ainsi que par une faible variation de la distribution en intensité de ces trains d'impulsions secondaires.

Le dispositif de l'invention permet d'engendrer des impulsions laser avec une variation en énergie inférieure à 1%. Ceci permet d'avoir une petite tolérance d'usinage relative à la surface des ouvertures définies par les trous et donc d'obtenir une faible variation de débit d'un fluide au travers de ceux-ci.

Les impulsions dans le domaine des microsecondes engendrées par le résonateur sont engendrées par exemple avec une fréquence variant entre 1 Hz et 1kHz. La durée de chacune de ces impulsions varie par exemple entre 10 microsecondes (µs) et quelques millisecondes (ms) alors que la durée des impulsions secondaires à la sortie du modulateur peut varier notamment entre 1 et 50µs. A l'aide de moyens d'amplification adéquats qui seront notamment décrits ci-après, la puissance de pointe des impulsions fournies peut par exemple être comprise entre 100W et 100kW. Le diamètre du faisceau laser avant l'optique de focalisation est typiquement inférieur à 50 mm. Etant donné la qualité du faisceau laser obtenu, il est possible de le focaliser précisément et de régler la distance du point focal relativement aux composants à usiner de manière très précise, notamment avec une tolérance inférieure à 50µm. On notera que le réglage précis de cette distance permet de définir aussi le profil du trou usiné selon sa section longitudinale.

Le dispositif selon l'invention permet d'usiner notamment des trous d'un diamètre compris entre 5 µm et 1mm. La précision d'usinage est relativement élevée, c'est-à-dire que des trous identiques peuvent être usinés successivement de manière reproductible et avec de faibles tolérances. On obtient une tolérance sur la conicité du trou inférieur à 5 % du diamètre de ce trou. La déformation du profil circulaire du trou est inférieure à 5 % du diamètre. La reproductibilité d'un trou prédéfini à l'autre peut être largement inférieure à 5 %, notamment inférieure à 2 %. Ces très bonnes tolérances résultent en particulier de l'utilisation d'un résonateur formé d'un milieu actif solide pompé par diodes laser et agencé pour fournir des impulsions primaires d'une durée relativement longue, lesquelles sont ensuite modulées par des moyens de modulation, en particulier une cellule Pockels, pour fournir des trains d'impulsions secondaires dont la distribution en intensité peut être adaptée de manière optimale en fonction de la dynamique du perçage et en particulier du matériau dans lequel le trou est effectué, ainsi que des dimensions de ce dernier.

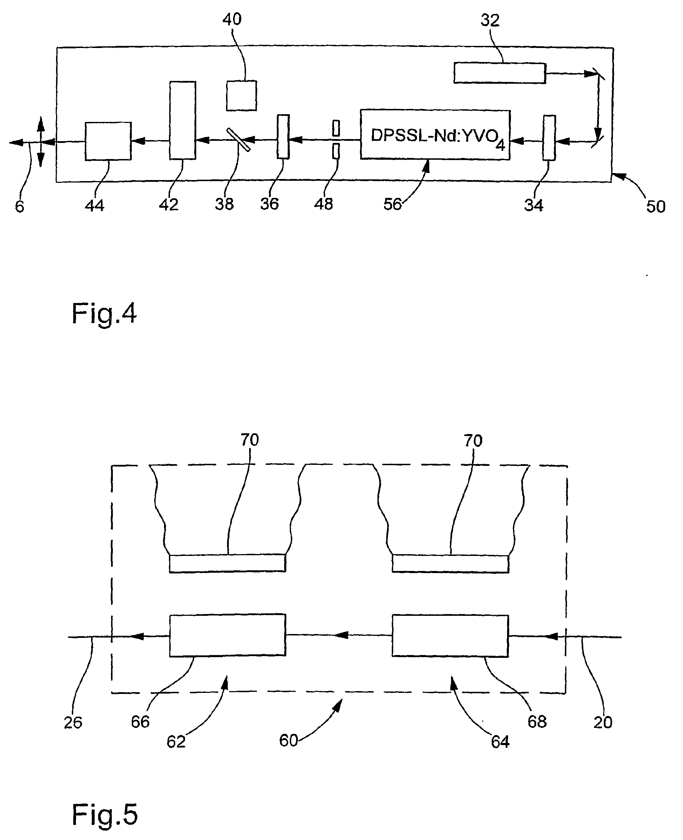

A la figure 4 est représenté un deuxième mode de réalisation du résonateur agencé dans le dispositif d'usinage laser de l'invention. Les éléments déjà mentionnés précédemment ne seront pas décrits à nouveau en détail. Ce résonateur 50 se distingue essentiellement de celui de la figure 2 par le fait que l'oscillateur 56 est formé par un cristal de Nd : YVO₄. Ce cristal présente la particularité de fournir directement un faisceau laser polarisé linéairement de sorte que l'intégration d'un polariseur dans le résonateur 50 est superflu. Ceci permet, pour une certaine puissance de pompage optique, d'obtenir un faisceau laser ayant une intensité bien supérieure à celle fournie par le résonateur de la figure 2 étant donné que l'intégration du polariseur 46 diminue sensiblement de moitié l'intensité lumineuse fournie. L'utilisation d'un tel cristal est connu pour des résonateurs avec un Q-svvitch fournissant des impulsions de durée très courte, mais n'a pas été proposé par l'homme du métier dans un résonateur agencé pour fournir des impulsions relativement longues, sans l'intégration d'un Q-switch. L'utilisation d'un tel cristal est de fait particulièrement adaptée au dispositif selon l'invention étant donné que les moyens de modulation décrits ci-avant nécessitent généralement une polarisation linéaire du faisceau laser entrant. On notera que l'homme du métier connaît d'autres cristaux ayant une même propriété.

Concernant la polarisation, on notera encore que l'agencement des divers éléments prévus dans le dispositif représenté à la figure 1 permet d'obtenir en sortie de la tête d'usinage un faisceau laser polarisé circulairement, ce qui est particulièrement adapté pour l'usinage de trous.

Selon un mode de réalisation particulier de l'invention, il est prévu que les moyens d'amplification 22 décrits précédemment soient formés d'au moins deux milieux actifs comme représentés schématiquement à la figure 5. Sur cette figure, les moyens d'amplification 60 des impulsions laser sont formés de deux cavités 62 et 64 comprenant chacune un milieu actif solide 66, respectivement 68 pompés optiquement par des lampes flash 70.

L'utilisation de lampes flash dans les moyens d'amplification constituent un mode de réalisation particulier de la présente invention, également dans le cas où les moyens d'amplification 22 comprennent une seule cavité. La raison principale de l'agencement d'une lampe flash dans les moyens d'amplification est actuellement économique. En effet, l'utilisation de matrice de diodes laser reste relativement onéreuse. Dans le cas de la présente invention, on a observé que l'utilisation de lampes flash dans les moyens d'amplification avaient une influence relativement peu néfaste sur la qualité du faisceau laser et sur la stabilité du dispositif d'usinage laser. En effet, l'utilisation de lampes flash dans les moyens d'amplification est bien moins critique que pour le résonateur dans lequel les impulsions laser sont engendrées.

Finalement, on notera que l'homme du métier peut prévoir divers arrangements pour les moyens d'amplification permettant d'obtenir plusieurs niveaux d'amplification pour le faisceau laser. Associé à d'autres éléments optiques, il est possible d'envisager des réalisations où le faisceau laser passe au moins deux fois dans chaque cavité. En outre, il est à noter que dans le cadre de la présente invention telle que revendiquée, le milieu optique de l'amplificateur peut aussi être pompé par des diodes laser.

## Revendications

1. Dispositif d'usinage laser pour percer des trous dans des composants de dispositifs d'injection d'un fluide et comprenant un résonateur laser (4, 50) formé d'un premier milieu actif solide et de premiers moyens de pompage optique formés par des diodes laser, ledit résonateur étant agencé pour engendrer des impulsions primaires ayant une durée dans le domaine des microsecondes ou supérieures, ce dispositif d'usinage laser étant **caractérisé en ce qu'**il comprend des moyens de modulation (8) recevant lesdites impulsions primaires et fournissant en sortie un train d'impulsions secondaires (12) pour chaque impulsion primaire (10), ces moyens de modulation étant agencés entre ledit résonateur (4) et une tête d'usinage (24).

2. Dispositif selon la revendication 1, **caractérisé en ce qu'**il comprend une diode optique (18) agencée en aval dudit résonateur.

3. Dispositif selon la revendication 1, **caractérisé en ce qu'**il comprend en outre des moyens d'amplification des impulsions fournies par ledit résonateur.

4. Dispositif selon la revendication 2, **caractérisé en ce qu'**il comprend en outre des moyens d'amplification des impulsions laser fournies par ledit résonateur, ces moyens d'amplification (22) étant agencés en aval de ladite diode optique (18).

5. Dispositif selon la revendication 2 ou 4, **caractérisé en ce que** ladite diode optique est formée par un polariseur linéaire et par une lame quart d'ondes agencée à la suite de ce polariseur.

6. Dispositif selon la revendication 3 ou 4, **caractérisé en ce que** lesdits moyens d'amplification sont commandés de manière à fournir des impulsions d'amplification décalées temporellement relativement aux impulsions primaires pour moduler en amplitude lesdites impulsions secondaires.

7. Dispositif selon la revendication 3 ou 4, **caractérisé en ce que** lesdits moyens d'amplification comprennent une cavité formée par un deuxième milieu actif solide et par des deuxièmes moyens de pompage optique formés par une lampe flash.

8. Dispositif selon la revendication 6, **caractérisé en ce que** lesdits moyens d'amplification comprennent plusieurs milieux actifs définissant plusieurs niveaux d'amplification, chacun de ces milieux actifs étant pompé par une lampe flash.

9. Dispositif selon l'une des revendications précédentes, **caractérisé en ce que** ledit résonateur est agencé pour fournir à sa sortie un faisceau laser polarisé linéairement.

10. Dispositif selon la revendication 8, **caractérisé en ce que** ledit premier milieu actif est formé par un cristal sélectionné parmi les cristaux engendrant eux-mêmes directement une lumière polarisée linéairement, en particulier un cristal de Nd : YVO₄.

11. Dispositif selon l'une des revendications précédentes, **caractérisé en ce qu'**il est agencé pour fournir des impulsions dans le domaine des microsecondes dont l'énergie permet le percement d'un trou prévu dans un composant donné par une seule impulsion primaire engendrée par ledit résonateur.

## Claims

1. Laser machining device for drilling holes in fluid injection device componentsand comprising a laser resonator (4, 50) formed of a first solid state active medium and first optical pumping means formed by laser diodes, said resonator being arranged for generating primary pulses having a length within or greater than the microsecond range, this laser machining device being **characterized in that** it includes modulation means (8) receiving said primary pulses and supplying a secondary pulse train (12) at output for each primary pulse (10), these modulation means being arranged between said resonator (4) and a machining head (24).

2. Device according to claim 1, **characterized in that** it includes an optical diode (18) arranged downstream of said resonator.

3. Device according to claim 1, **characterized in that** it further includes means for amplifying the pulses supplied by said resonator.

4. Device according to claim 2, **characterized in that** it further includes means for amplifying the laser pulses supplied by said resonator, said amplification means (22) being arranged downstream of said optical diode (18).

5. Device according to claim 2 or 4, **characterized in that** said optical diode is formed by a linear polarizer and by a quarter-wave plate arranged following said polarizer.

6. Device according to claim 3 or 4, **characterized in that** said amplification means are controlled so as to provide amplification pulses with a time lag relative to the primary pulses in order to modulate the amplitude of said secondary pulses.

7. Device according to claim 3 or 4, **characterized in that** said amplification means include a cavity formed by a second solid state active medium and by second optical pumping means formed by a flash lamp.

8. Device according to claim 6, **characterized in that** said amplification means include several active mediums defining several amplification levels, each of said active mediums being pumped by a flash lamp.

9. Device according to any of the preceding claims, **characterized in that** said resonator is arranged for supplying at the outlet thereof a linearly polarized laser beam.

10. Device according to claim 8, **characterized in that** said first active medium is formed by a crystal selected from among crystals that directly generate a linearly polarized light, in particular a Nd:YVO₄ crystal.

11. Device according to any of the preceding claims, **characterized in that** it is arranged for supplying pulses in the microsecond range whose energy enables a hole to be drilled in a given component by a single primary pulse generated by said resonator.

## Patentansprüche

1. Vorrichtung zur Laserbearbeitung zum Herstellen von Löchern in Bauteilen einer Fluideinspritzvorrichtung und umfassend einen Resonanzlaser (40, 50), der aus einem ersten festen laseraktiven Material und ersten optischen, durch Laserdioden gebildeten Pumpmitteln gebildet ist, wobei der Resonator ausgebildet ist, um primäre Impulse zu erzeugen, die eine Dauer im Bereich von Mikrosekunden oder höher aufweisen, wobei die Vorrichtung zur Laserbearbeitung **dadurch gekennzeichnet ist, daß** sie ferner Modulationsmittel (8) umfaßt, die die primären Impulse empfangen und am Ausgang eine Folge von sekundären Impulsen (12) für jeden primären Impuls (10) liefern, wobei die Modulationsmittel zwischen dem Resonator (4) und einem Bearbeitungskopf (24) angeordnet sind.

2. Vorrichtung nach Anspruch 1, **dadurch gekennzeichnet, daß** sie eine dem Resonator nachgeschaltete optische Diode (18) umfaßt.

3. Vorrichtung nach Anspruch 1, **dadurch gekennzeichnet, daß** sie ferner Verstärkungsmittel für durch den Resonator gelieferten Impulse umfaßt.

4. Vorrichtung nach Anspruch 2, **dadurch gekennzeichnet, daß** sie ferner Verstärkungsmittel für durch den Resonator erzeugte Laserimpulse umfaßt, wobei die Verstärkungsmittel (22) der optischen Diode (18) nachgeschaltet sind.

5. Vorrichtung nach Anspruch 2 oder 4, **dadurch gekennzeichnet, daß** die optische Diode durch einen linearen Polarisator und durch eine dem Polarisator nachgeschaltete Lambda-Viertel-Platte gebildet ist.

6. Vorrichtung nach Anspruch 3 oder 4, **dadurch gekennzeichnet, daß** die Verstärkungsmittel derart gesteuert werden, daß zeitlich gegenüber den primären Impulsen verschobene Verstärkungsimpulse geliefert werden, um die sekundären Impulsen amplitudenzumodulieren.

7. Vorrichtung nach Anspruch 3 oder 4, **dadurch gekennzeichnet, daß** die Verstärkungsmittel einen Raum umfassen, der durch ein zweites festes laseraktives Material und durch zweite optische Pumpmittel, die durch eine Blitzlampe gebildet sind, umfassen.

8. Vorrichtung nach Anspruch 6, **dadurch gekennzeichnet, daß** die Verstärkungsmittel mehrere laseraktive Materialien umfassen, die mehrere Verstärkungspegel definieren, wobei jedes der laseraktiven Materialien durch eine Blitzlampe gepumpt wird.

9. Vorrichtung nach einem der vorhergehenden Ansprüche, **dadurch gekennzeichnet, daß** der Resonator ausgestaltet ist, um an seinem Ausgang einen linearpolarisierten Laserstrahl zu liefern.

10. Vorrichtung nach Anspruch 8, **dadurch gekennzeichnet, daß** das erste laseraktive Material aus einem Kristall gebildet ist, der aus Kristallen ausgewählt ist, die ihrerseits direkt linearpolarisiertes Licht erzeugen, insbesondere ein Kristall aus Nd:YVO₄.

11. Vorrichtung nach einem der vorangehenden Ansprüche, **dadurch gekennzeichnet, daß** sie ausgestaltet ist, um Impulse im Bereich von Mikrosekunden zu liefern, deren Energie die Herstellung eines in einem gegebenen Bauteil vorgesehenen Loches durch einen einzigen durch den Resonator erzeugten primären Impuls erlauben.
